# EUROPEAN PATENT SPECIFICATION

(11) **EP 2 966 357 B1**
(45) Date of publication and mention of the grant of the patent: **21.10.2020**
(21) Application number: 15176431.3
(22) Date of filing: 13.07.2015
(51) Int. Cl.: F23R 3/12, B23P 6/00, F23R 3/28

(54) **FUEL INJECTOR AND SWIRLER FOR A GAS TURBINE**
KRAFTSTOFFEINSPRITZDÜSE UND DRALLERZEUGER FÜR EINE GASTURBINE
INJECTEUR DE CARBURANT ET TOURBILLONNEUR POUR UNE TURBINE À GAZ

(30) Priority: 11.07.2014 US 201462023359 P
(43) Date of publication of application: 13.01.2016
(73) Proprietor: United Technologies Corporation, Farmington, CT 06032 (US)
(72) Inventor: OTT, Joe, Enfield, CT Connecticut 06082 (US); FUNK, Stanley J., Southington, CT Connecticut 06489 (US); DAUTOVA, Lyutsia, Rocky Hill, CT Connecticut 06067 (US); RUP, Jr., John J., Willington, CT Connecticut 06279 (US); MOURA, Dennis M., South Windsor, CT Connecticut 06074 (US); STEMPINSKI, Shawn, Simsbury, CT Connecticut 06070 (US); COFFEY, Roger O., Glastonbury, CT Connecticut 06033 (US)
(74) Representative: Dehns

(56) References cited:
- EP-A1- 1 685 923
- EP-A2- 2 664 410
- WO-A1-01/20534
- WO-A1-2014/043537
- US-A1- 2009 255 102
- US-A1- 2012 227 408
- US-B2- 7 984 547

## Description

### BACKGROUND

The present disclosure relates to a gas turbine engine and, more particularly, to additive manufactured wear components for combustor components.

Gas turbine engines, such as those that power modern commercial and military aircraft, include a compressor section to pressurize airflow, a combustor section to burn a hydrocarbon fuel in the presence of the pressurized airflow, and a turbine section to extract energy from the resultant combustion gases.

The combustor section includes a multiple of circumferentially distributed fuel nozzles and swirlers in communication with a combustion chamber to mix fuel with the pressurized airflow. Although effective, the fuel nozzles and swirlers are relatively complicated to manufacture.

The fuel nozzles typically includes a wear surface to protect the fuel nozzle from heat as well as material wear at interfacing areas with the swirler which may also include a wear surface. Typical construction of these details requires assembly of many components as well as welding and/or brazing. Fuel nozzles are described in US 2009/255102.

A fuel injector and a swirler for a gas turbine engine, wherein the swirler includes a guide housing, a nozzle guide and a capture plate mounted to the guide housing to retain the nozzle guide, are known from WO 2014/043537 A1.

### SUMMARY

A fuel injector and a swirler are provided as defined in claim 1.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is a partial sectional view of an exemplary annular combustor that may be used with the gas turbine engine shown in Figure 1;
Figure 3 is an exploded view of a swirler and fuel injector; and
Figure 4 is an exposed sectional view of the swirler and fuel injector.

### DETAILED DESCRIPTION

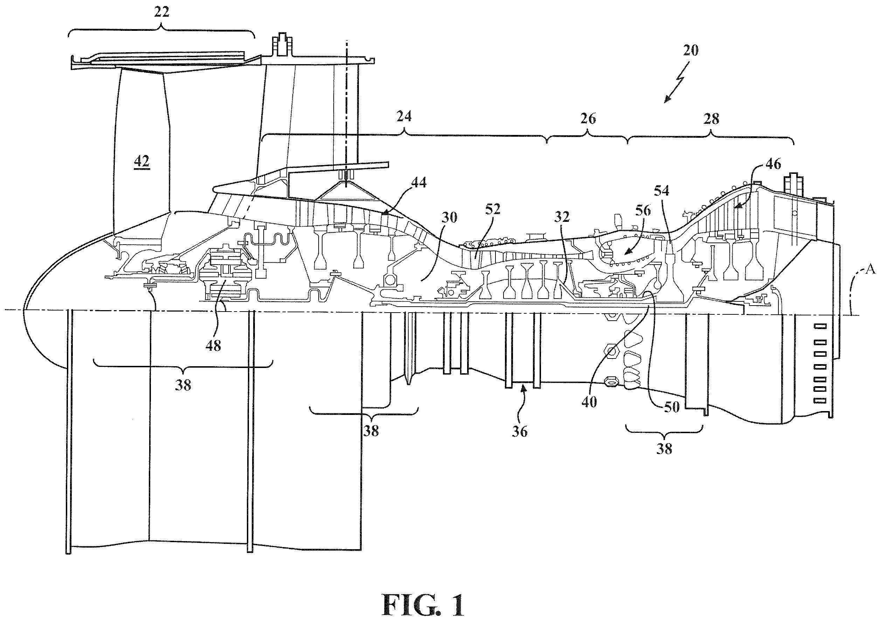

Figure 1 schematically illustrates a gas turbine engine 20. The gas turbine engine 20 is disclosed herein as a two-spool turbofan that generally incorporates a fan section 22, a compressor section 24, a combustor section 26, and a turbine section 28. The fan section 22 drives air along a bypass flowpath and a core flowpath for compression in the compressor section 24, communication into the combustor section 26, then expansion through the turbine section 28. Although primarily depicted as a turbofan gas turbine engine in the disclosed non-limiting embodiment, it should be understood that the concepts described herein are not limited to use with turbofans as the teachings may be applied to other types of turbine engines.

The engine 20 generally includes a low spool 30 and a high spool 32 mounted for rotation about an engine central longitudinal axis A relative to an engine static structure 36. The low spool 30 generally includes an inner shaft 40 that interconnects a fan 42, a low pressure compressor ("LPC") 44, and a low pressure turbine ("LPT") 46. The inner shaft 40 drives the fan 42 directly, or through a geared architecture 48, to drive the fan 42 at a lower speed than the low spool 30. An exemplary reduction transmission is an epicyclic transmission, namely a planetary or star gear system.

The high spool 32 includes an outer shaft 50 that interconnects a high pressure compressor ("HPC") 52, and a high pressure turbine ("HPT") 54. A combustor module 56 is arranged between the HPC 52 and the HPT 54. The inner shaft 40 and the outer shaft 50 are concentric and rotate about the engine central longitudinal axis A. The main engine shafts 40, 50 are supported at a plurality of points by bearing structures 38 within the static structure 36.

Core airflow is compressed by the LPC 44, then the HPC 52, mixed with fuel and burned in the combustor module 56, then expanded through the HPT 54 and LPT 46. The LPT 46 and HPT 54 rotationally drive the respective low spool 30 and high spool 32 in response to the expansion.

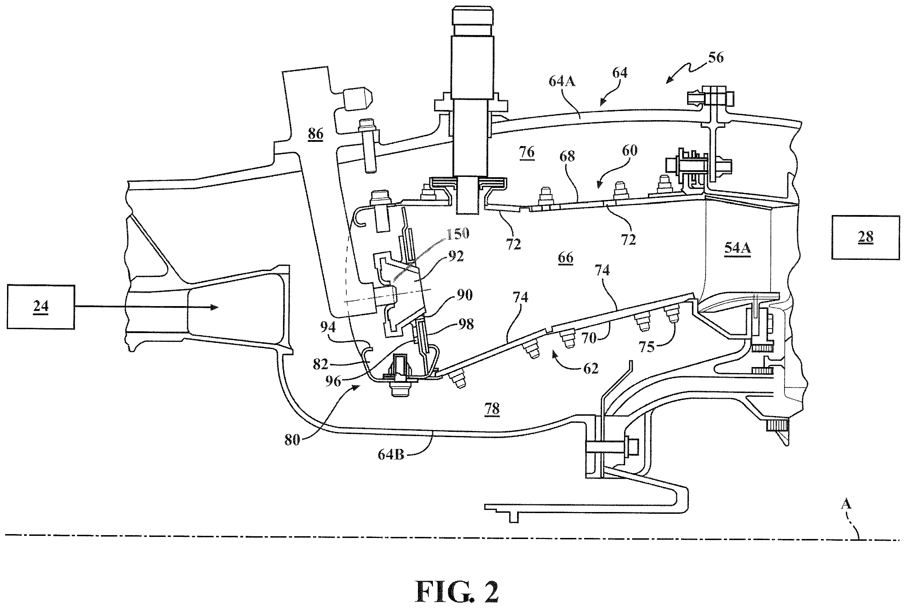

With reference to Figure 2, the combustor module 56 generally includes a combustor outer wall 60 and a combustor inner wall 62. The outer wall 60 and the inner wall 62 are spaced inward from a diffuser case 64 and a chamber 66 is defined there between. The chamber 66 is generally annular in shape and is defined between combustor walls 60, 62. The outer wall 60 and the diffuser case 64 define an annular outer plenum 76 and the inner wall 62 and the diffuser case 64 define an annular inner plenum 78. Each wall 60, 62 generally includes a respective support shell 68, 70 that supports one or more respective liners 72, 74 mounted to the respective support shell 68, 70. Each of the liners 72, 74 may be generally rectilinear and manufactured of, for example, a nickel based super alloy or ceramic material. It should be appreciated that although a particular combustor is illustrated, other combustor types with various combustor liner arrangements will also benefit herefrom.

The combustor module 56 further includes a forward assembly 80 immediately downstream of the compressor section 24 to receive compressed airflow therefrom. The forward assembly 80 generally includes an annular hood 82, and a bulkhead subassembly 84 that locates a multiple of fuel injectors 86 (one shown) and a multiple of swirlers 90 (one shown). Each of the swirlers 90 is mounted within a respective opening 92 in the bulkhead subassembly 84.

The annular hood 82 extends radially between, and is secured to, the forwardmost ends of the walls 60, 62. The annular hood 82 includes a multiple of circumferentially distributed hood ports 94 to accommodate a respective fuel injector 86 and introduce air into each of the respective swirlers 90. Each fuel injector 86 may be secured to the outer case 64 to project through one of the hood ports 94 and into the respective swirler 90 along a fuel injector axis F. The forward assembly 80 directs a portion of the core airflow into the forward end of the combustion chamber 66 while the remainder enters the annular outer plenum 76 and the annular inner plenum 78. The multiple of fuel injectors 86, swirlers 90 and surrounding structure generate a swirling, intimately blended fuel-air mixture that supports combustion in the chamber 66.

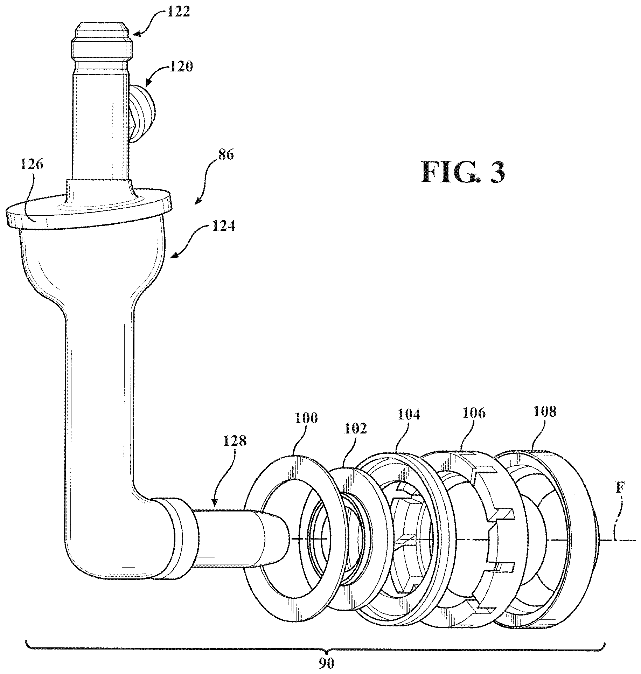

With reference to Figure 3, each swirler 90 generally includes a capture plate 100, a nozzle guide 102, a guide housing 104, a swirler inner body 106, and a swirler outer body 108, each arranged along a swirler central longitudinal axis F. The capture plate 100 is mounted to the guide housing 104 to retain the nozzle guide 102 such that the nozzle guide 102 is movable with respect to the guide housing 104. Each of the multiple of fuel injectors 86 - illustrated herein as a duplex fuel nozzle - may include a first inlet 120, a second inlet 122, a support 124, a mount flange 126 and a nozzle tip 128. It should be appreciated that any number of swirler body and fuel injectors components as well as alternative or additional components may be utilized herewith and that the swirler body shown is merely but one example assembly.

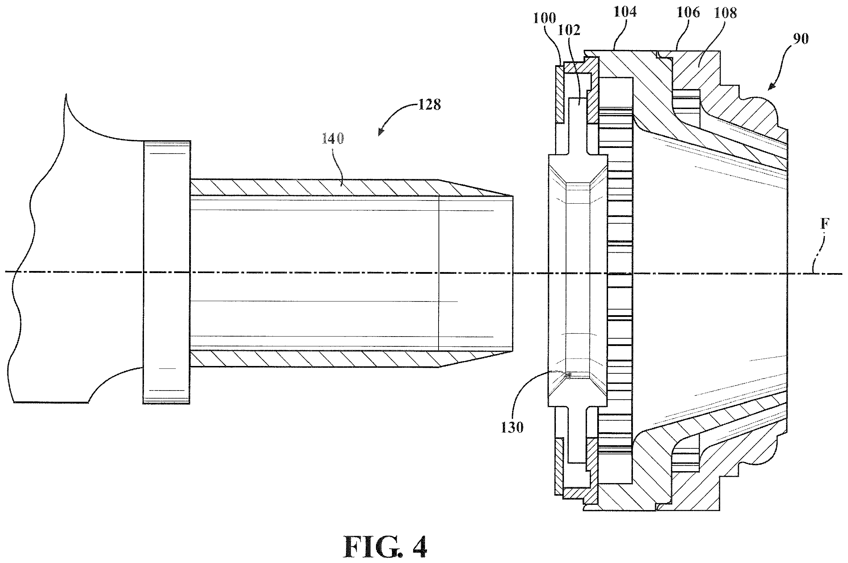

With reference to Figure 4, according to the invention, the nozzle guide 102 includes an additively manufactured swirler wear surface 130 and the nozzle tip 128 includes an additively manufactured nozzle wear surface 140. The additively manufactured swirler wear surface 130 and/or the additively manufactured nozzle wear surface 140 accommodate wear from the relative movement at interfacing areas 150 (Figure 2) between each swirler 90 and the associated fuel injectors 86 such that only the wear surface 130, 140 need be replaced.

The wear surface 130, 140 may be readily manufactured with an additive manufacturing process that includes, but is not limited to, Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD) and Laser Powder Bed Fusion (LPBF). The additive manufacturing process sequentially builds-up layers of atomized alloy and/or ceramic powder material that include but are not limited to, 625 Alloy, 718 Alloy, 230 Alloy, stainless steel, tool steel, cobalt chrome, titanium, nickel, aluminum, Waspaloy, Stellite, Titanium, Steels, Stainless Steels, Cobalt Chrome, Hastalloy X, and others. Alloys such as 625, 718 and 230 may have specific benefit for parts that operate in high temperature environments, such as, for example, environments typically encountered by aerospace and gas turbine engine components.

According to the invention, the additively manufactured swirler wear surface 130 may be readily additively manufactured to a conventionally manufactured nozzle guide 102. That is, the swirler 90 may be manufactured in a conventional manner and the wear surface 130 is incorporated thereafter. An additively manufactured process may thus be utilized to readily repair the additively manufactured swirler wear surface 130 once wear occurs over time. That is, material is additively manufactured to the additively manufactured swirler wear surface 130 to repair the additively manufactured swirler wear surface 130 that has become worn over time. Such repairs may result in a relatively less expensive life cost than that of a conventional sleeve replacement type swirler.

In another disclosed non-limiting embodiment, the additively manufactured nozzle wear surface 140 may be readily additively manufactured onto the nozzle tip 128. Alternatively, the additively manufactured nozzle wear surface 140 is incorporated during the additively manufactured process of the fuel injectors 86 or a component thereof.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude and should not be considered otherwise limiting.

## Claims

1. A fuel injector (86) and a swirler (90) for a gas turbine engine, the swirler (90) being defined along a swirler central longitudinal axis (F); the fuel injector (86) having a nozzle tip (128) defined along the swirler central longitudinal axis (F), the tip provided with an additively manufactured nozzle wear surface (140); wherein the swirler (90) includes a capture plate (100), a swirler inner body (106), a swirler outer body (108), a guide housing (104) and a nozzle guide (102) including a swirler wear surface (130), the nozzle guide (102) movable relative to the guide housing (104) and selectively contacting said additively manufactured nozzle wear surface (140) to accommodate wear from the relative movement between the swirler (90) and the fuel injector (86); wherein said capture plate (100), said nozzle guide (102), said guide housing (104), said swirler inner body (106), and said swirler outer body (108) are arranged along the swirler central longitudinal axis (F); wherein the swirler is not additively manufactured; and
wherein said capture plate (100) is mounted to said guide housing to retain said nozzle guide, said capture plate mounted to said guide housing to retain said nozzle guide such that said nozzle guide is movable with respect to said swirler central longitudinal axis.

2. The fuel injector and the swirler, as claimed in claim 1, wherein said capture plate is annular and surrounds said additively manufactured nozzle wear surface.

3. The fuel injector and the swirler, as claimed in claim 1, wherein said additively manufactured nozzle wear surface is defined around a fuel injector axis (F) that is coaxial with said swirler central longitudinal axis.

## Patentansprüche

1. Kraftstoffeinspritzdüse (86) und Drallerzeuger (90) für ein Gasturbinentriebwerk, wobei der Drallerzeuger (90) entlang einer Drallerzeugermittellängsachse (F) definiert ist;
wobei die Kraftstoffeinspritzdüse (86) eine Düsenspitze (128) aufweist, die entlang der Drallerzeugermittellängsachse (F) definiert ist, wobei die Spitze mit einer Düsenverschleißfläche (140) additiver Herstellung bereitgestellt ist; wobei der Drallerzeuger (90) eine Auffangplatte (100), einen Drallerzeugerinnenkörper (106), einen Drallerzeugeraußenkörper (108), ein Führungsgehäuse (104) und eine Düsenführung (102) beinhaltet, die eine Drallerzeugerverschleißfläche (130) beinhaltet, wobei die Düsenführung (102) relativ zu dem Führungsgehäuse (104) beweglich ist und selektiv die Düsenverschleißfläche (140) additiver Herstellung berührt, um Verschleiß von der relativen Bewegung zwischen dem Drallerzeuger (90) und der Kraftstoffeinspritzdüse (86) zu berücksichtigen;
wobei die Auffangplatte (100), die Düsenführung (102), das Führungsgehäuse (104), der Drallerzeugerinnenkörper (106) und der Drallerzeugeraußenkörper (108) entlang der Drallerzeugermittellängsachse (F) angeordnet sind;
wobei der Drallerzeuger nicht durch additive Herstellung hergestellt ist; und
wobei die Auffangplatte (100) an dem Führungsgehäuse montiert ist, um die Düsenführung zurückzuhalten, wobei die Auffangplatte an dem Führungsgehäuse montiert ist, um die Düsenführung derart zurückzuhalten, dass die Düsenführung in Bezug auf die Drallerzeugermittellängsachse beweglich ist.

2. Kraftstoffeinspritzdüse und Drallerzeuger nach Anspruch 1, wobei die Auffangplatte ringförmig ist und die Düsenverschleißfläche additiver Herstellung umgibt.

3. Kraftstoffeinspritzdüse und Drallerzeuger nach Anspruch 1, wobei die Düsenverschleißfläche additiver Herstellung um eine Kraftstoffeinspritzdüsenachse (F) definiert ist, die koaxial mit der Drallerzeugermittellängsachse ist.

## Revendications

1. Injecteur de carburant (86) et tourbillonneur (90) pour un moteur à turbine à gaz, le tourbillonneur (90) étant défini le long d'un axe longitudinal central de tourbillonneur (F) ;
l'injecteur de carburant (86) ayant une pointe de buse (128) définie le long de l'axe longitudinal central de tourbillonneur (F), la pointe étant pourvue d'une surface d'usure de buse fabriquée de manière additive (140) ; dans lequel le tourbillonneur (90) comporte une plaque de capture (100), un corps intérieur de tourbillonneur (106), un corps extérieur de tourbillonneur (108), un boîtier de guidage (104) et un guide de buse (102) comportant une surface d'usure de tourbillonneur (130), le guide de buse (102) étant mobile par rapport au boîtier de guidage (104) et en contact sélectif avec ladite surface d'usure de buse fabriquée de manière additive (140) pour s'adapter à l'usure du mouvement relatif entre le tourbillonneur (90) et l'injecteur de carburant (86) ;
dans lequel ladite plaque de capture (100), ledit guide de buse (102), ledit boîtier de guidage (104), ledit corps intérieur de tourbillonneur (106) et ledit corps extérieur de tourbillonneur (108) sont agencés le long de l'axe longitudinal central de tourbillonneur (F) ;
dans lequel le tourbillonneur n'est pas fabriqué de manière additive ; et
dans lequel ladite plaque de capture (100) est montée sur ledit boîtier de guidage pour retenir ledit guide de buse, ladite plaque de capture étant montée sur ledit boîtier de guidage pour retenir ledit guide de buse de sorte que ledit guide de buse est mobile par rapport audit axe longitudinal central de tourbillonneur.

2. Injecteur de carburant et tourbillonneur selon la revendication 1, dans lequel ladite plaque de capture est annulaire et entoure ladite surface d'usure de buse fabriquée de manière additive.

3. Injecteur de carburant et tourbillonneur selon la revendication 1, dans lequel ladite surface d'usure de buse fabriquée de manière additive est définie autour d'un axe d'injecteur de carburant (F) qui est coaxial audit axe longitudinal central de tourbillonneur.
